# EUROPEAN PATENT APPLICATION

(11) **EP 4 164 320 A1**
(43) Date of publication of application: **12.04.2023**
(21) Application number: 20939172.1
(22) Date of filing: 05.06.2020
(51) Int. Cl.: H04W 72/12

(54) **CHANNEL ACCESS METHOD, CHANNEL ACCESS APPARATUS, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/094720
(87) International publication number: WO 2021/243711

(57) **Abstract**

The present disclosure relates to a channel access method, a channel access apparatus, and a storage medium. The channel access method comprises: configuring a listen-before-talk channel occupancy manner, wherein the listen-before-talk channel occupancy manner comprises not needing to perform idle channel detection before data is sent; and sending configuration information of the listen-before-talk channel occupancy manner. By means of the present disclosure, a listen-before-talk channel occupancy manner that comprises not needing to perform the idle channel detection before data is sent is configured, and a listen-before-talk channel occupancy manner that effectively avoids inference and also improves the transmission efficiency can be configured on an unlicensed spectrum without serious interference.

## Description

### TECHNICAL FIELD

The disclosure relates to a field of communication technologies, and in particular to channel access methods, channel access apparatuses, and a storage medium.

### BACKGROUND

In the discussion and design of the R16 New Radio-Unlicensed (NR-U) standard, the transmitting end generally performs clear channel assessment (CCA) before sending data, and evaluates the interference level in the channel based on the CCA test result, that is, the Listen Before Talk channel occupancy mechanism is used for data transmission. The LBT mechanism is as follows: if the interference level in the channel is lower than a detection threshold (the detection threshold is specified by the communication protocol), the transmitting end determines that the channel is idle, and the transmitting end can occupy the channel to transmit data. If the interference level in the channel is higher than the detection threshold, the transmitting end determines that the channel is busy, and the transmitting end will not be able to occupy the channel to transmit data.

The future NR-U spectrum will be deployed on high frequency unlicensed spectrum, such as high frequency spectrum above 50GHz. When deployed on the high-frequency spectrum, due to the significant increase in signal transmission loss at the high frequencies, there is no serious mutual interference between different nodes even if these nodes are relatively close. For the unlicensed spectrum where interference is not serious, how to configure the terminal to perform LBT to effectively avoid the interference and improve the transmission efficiency is a technical problem that needs to be solved urgently.

### SUMMARY

In order to overcome the problems in the related art, the disclosure provides channel access methods, channel access apparatuses and storage media.

According to a first aspect of embodiments of the disclosure, there is provided a channel access method. The method includes configuring a Listen Before Talk channel occupancy mode, in which the Listen Before Talk channel occupancy mode includes not performing clear channel assessment before sending data; and sending configuration information of the Listen Before Talk channel occupancy mode.

According to a second aspect of embodiments of the disclosure, there is provided a channel access method. The method includes:
receiving configuration information of a Listen Before Talk channel occupancy mode; determining a configured Listen Before Talk channel occupancy mode based on the configuration information, in which the Listen Before Talk channel occupancy mode includes not performing clear channel assessment before sending data.

According to a third aspect of embodiments of the disclosure, there is provided a channel access apparatus. The apparatus includes:
a processing unit, configured to configure a Listen Before Talk channel occupancy mode, in which the Listen Before Talk channel occupancy mode includes not performing clear channel assessment before sending data; and a sending unit configured to send configuration information of the Listen Before Talk channel occupancy mode.

According to a fourth aspect of embodiments of the disclosure, there is provided a channel access apparatus. The apparatus includes:
a receiving unit configured to receive configuration information of a Listen Before Talk channel occupancy mode; a processing unit configured to determine a configured Listen Before Talk channel occupancy mode based on the configuration information, in which the Listen Before Talk channel occupancy mode includes not performing clear channel assessment before sending data.

According to a fifth aspect of embodiments of the disclosure, there is provided a channel access device. The device includes:
a processor; and
a memory configured to store instructions executable by the processor;
in which, the processor is configured to execute the channel access method described in the first aspect.

According to a sixth aspect of embodiments of the disclosure, there is provided a channel access device. The device includes:
a processor; and
a memory configured to store instructions executable by the processor;
in which the processor is configured to execute the channel access method described in the second aspect.

According to a seventh aspect of embodiments of the disclosure, there is provided a non-transitory computer-readable storage medium. When instructions in the storage medium are executed by a processor of a network device, the network device is caused to execute the channel access method described in the first aspect.

According to an eighth aspect of embodiments of the disclosure, there is provided a non-transitory computer-readable storage medium. When instructions in the storage medium are executed by a processor of a mobile terminal, the mobile terminal is caused to execute the channel access method described in the second aspect.

The technical solution according to embodiments of the disclosure may include the following beneficial effects. By configuring the Listen Before Talk channel occupancy mode that does not require clear channel assessment before sending data, it is possible to achieve the configuration of the Listen Before Talk channel occupancy mode that avoids interference and improves transmission efficiency on the unlicensed spectrum where interference is not serious.

It is understandable that the above general description and the following detailed description are only explanatory and examples, and cannot limit the disclosure.

### BRIEF DESCRIPTION OF THE DRAWINGS

The drawings herein are incorporated into the specification and constitute a part of the specification, show embodiments consistent with the disclosure, and are used together with the specification to explain the principle of the disclosure.
FIG. 1 is a schematic diagram illustrating a communication system according to some embodiments.
FIG. 2 is a schematic diagram illustrating a Cat2 channel detection according to some embodiments.
FIG. 3 is a schematic diagram illustrating a Cat4 channel detection according to some embodiments.
FIG. 4 is a flowchart illustrating a channel access method according to some embodiments.
FIG. 5 is a flowchart illustrating a channel access method according to some embodiments.
FIG. 6 is a flowchart illustrating a channel access method according to some embodiments.
FIG. 7 is a block diagram illustrating a channel access device according to some embodiments.
FIG. 8 is a block diagram illustrating a channel access device according to some embodiments.
FIG. 9 is a block diagram illustrating a channel access apparatus according to some embodiments.
FIG. 10 is a block diagram illustrating a channel access device according to some embodiments.

### DETAILED DESCRIPTION

Here, embodiments will be described in detail, and examples thereof are shown in the accompanying drawings. When the following description refers to the drawings, unless otherwise indicated, the same numbers in different drawings indicate the same or similar elements. The implementation manners described in the following embodiments do not represent all implementation manners consistent with the disclosure. On the contrary, they are merely examples of devices and methods consistent with some aspects of the disclosure as detailed in the appended claims.

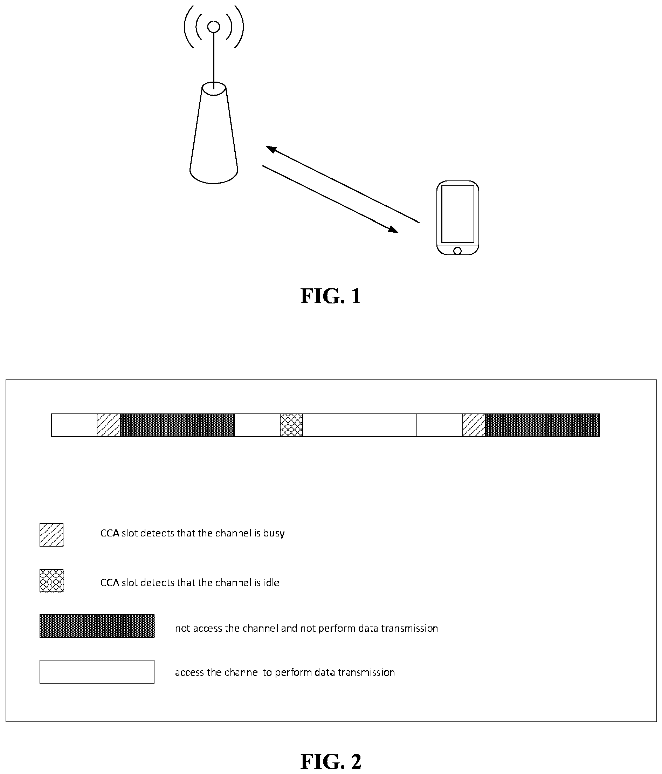

The channel access method according to embodiments of the disclosure can be applied to the wireless communication system illustrated as FIG. 1. Referring to FIG. 1, the wireless communication system includes a terminal and a network device. Information is sent and received between the terminal and the network device through wireless resources.

It is understandable that the wireless communication system illustrated in FIG. 1 is only for schematic illustration, and the wireless communication system may also include other network devices, such as a core network device, a wireless relay device, and a wireless backhaul device, which are not illustrated in FIG. 1. Embodiments of the disclosure do not limit the number of network devices and the number of terminals included in the wireless communication system.

It is further understandable that the wireless communication system of the embodiments of the disclosure is a network that provides wireless communication functions. The wireless communication system can use different communication technologies, such as code division multiple access (CDMA), wideband code division multiple access (WCDMA), and time division multiple access (TDMA), frequency division multiple access (FDMA), orthogonal frequency-division multiple access (OFDMA), single carrier FDMA (SC-FDMA), Carrier Sense Multiple Access with Collision Avoidance. According to different capacity, speed, delay and other factors of the network, the network can be classified as a 2 generation (2G) network, a 3G network, a 4G network or a future evolution network, such as a 5G network. The 5G network can also be called New Radio (NR). For the convenience of description, the wireless communication network is sometimes referred to as a network for short in this disclosure.

Further, the network device involved in the disclosure may also be referred to as a wireless access network device. The wireless access network device may be: a base station, an evolved node B which is an evolved base station, a home base station, an access point (AP) in a wireless fidelity (WIFI) system, a wireless relay node, a wireless backhaul node, a transmission point (TP), or a transmission and reception point (TRP), or can also be a gNB in the NR system, or can also be a component or part constituting the base station. When it is a vehicle-to-vehicle (V2X) communication system, the network device may also be a vehicle-mounted device. It is understandable that, in embodiments of the disclosure, the specific technology and specific device form adopted by the network device are not limited.

Further, the terminal involved in the disclosure may also be referred to as terminal device, user equipment (UE), mobile station (MS), mobile terminal (MT), which is a device that provides voice and/or data connectivity. For example, the terminal may be a handheld device with a wireless connection function, a vehicle-mounted device, and the like. At present, some examples of the terminal are: Mobile Phone, Pocket Personal Computer (PPC), handheld computer, Personal Digital Assistant (PDA), notebook computer, tablet computer, wearable device, or vehicle-mounted device, etc. In addition, when it is a vehicle-to-vehicle (V2X) communication system, the terminal device may also be a vehicle-mounted device. It is understandable that embodiments of the disclosure do not limit the specific technology and specific device form adopted by the terminal.

In related arts, before the terminal and the network device send information, an information sending end (e.g., the network device or the terminal) uses the Listen Before Talk (LBT) channel occupancy mechanism to perform clear channel assessment (CCA), and the sending end sends the information after the CCA is successful.

The LBT mechanism is used to control interference on the unlicensed frequency bands to ensure the equal coexistence of multiple access modes, for example, to ensure the coexistence of the WIFI system and the NR-U system. The LBT mechanism can also ensure that resources are shared between different sites in the same system. There are many LBT modes, such as the Category 2 LBT (also called Cat2) and the Category 4 LBT (also called Cat 4) commonly used in the NR-U system.

For the Cat2 channel detection mechanism, as illustrated in FIG. 2, the specific process is that the wireless communication device performs a single-slot CCA listening, if the CCA slot detects that the channel is idle, the wireless communication device can immediately access the channel, and if the CCA slot detects that the channel is busy, the wireless communication device waits for the next CCA slot to listen again and can access the channel immediately after the channel is idle.

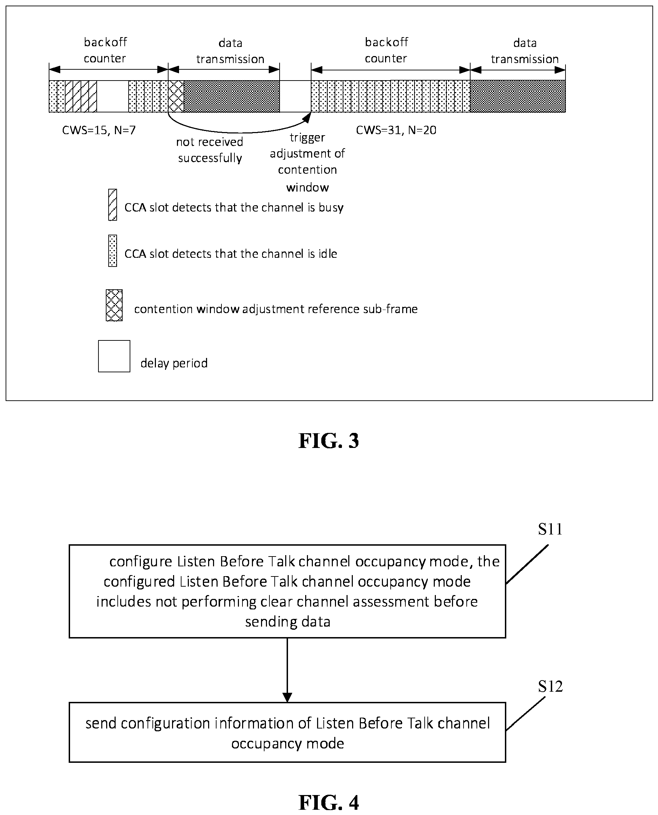

The Cat4 channel detection mechanism is based on the CCA with random backoff mechanism, and the implementation process is illustrated in FIG. 3. The wireless communication device uniformly and randomly generates a backoff counter N between 0 and the Contention Window Size (CWS), and listens with the CCA slot as the granularity. If it is detected that the channel is idle within the CCA slot, the backoff counter is decremented by one; otherwise, if it is detected that the channel is busy, the backoff counter is suspended, that is, the backoff counter N remains unchanged during the busy period of the channel until it is detected that the channel is idle. When the backoff counter is reduced to 0, the wireless communication device can immediately occupy the channel. The CWS value of the Cat4 is dynamically adjusted. The wireless communication device dynamically adjusts the CWS according to whether the previous transmission is correctly received by the receiving node. In this way, an appropriate CWS value can be obtained through an adjustment according to the channel state and the network traffic load, and a compromise can be achieved between reducing collisions between the sending nodes and improving channel access efficiency. For example, as illustrated in FIG. 3, the first downlink PDSCH transmission corresponds to CWS=15. During the first downlink transmission, the receiving of the PDSCH by the user is not successful. Therefore, the network device increases the value of CWS to CWS = 31 according to this error receiving state, and uses this increased CWS to generate a random number N and perform channel listening before the second downlink PDSCH transmission.

In the NR-U, for the PDSCH/PUSCH transmission that is dynamically scheduled or activated by the downlink/uplink scheduling instructions, the network device configures, through the Radio Resource Control (RRC) signaling for the terminal, one or more LBT modes that the terminal may use. One LBT mode is, for example, a combination of multiple parameters, such as LBT Cat type, channel occupancy priority (the priority of the channel occupancy can be used to determine the CWS and the maximum time length of the channel occupancy, etc.), cyclic prefix (CP) extension, etc. Then, the network device indicates, in the downlink/uplink scheduling instruction, an LBT mode that is actually used for downlink reception/uplink transmission by the terminal in this scheduling.

The NR-U system in the current protocol is deployed on 5GHz to 7GHz. The future NR-U spectrum will be deployed on a higher frequency spectrum, such as a frequency spectrum higher than 50GHz. When the NR-U spectrum is deployed at high frequencies, since the signal transmission loss at high frequencies increases significantly, there is no serious mutual interference between different nodes even if they are relatively close. In addition, for the unlicensed spectrum network with controllable interferences, for example, for the unlicensed spectrum network deployed on a large factory where the locations of various network device and terminals are relatively fixed, since the network environment inside the factory is controllable, there is no other interference on the unlicensed frequency band inside the factory.

For the unlicensed spectrum system with controllable interferences deployed on high frequency bands, the interference is not serious. Configuring the LBT using an existing method of the NR-U that uses the RRC layer signaling to configure and use the scheduling instruction to indicate may reduce the transmission efficiency. Therefore, for the unlicensed spectrum where the interference is not serious, how to configure the LBT mode for the terminal to effectively avoid interference and improve transmission efficiency is a technical problem that needs to be solved urgently.

Embodiments of the disclosure provide a channel access method. The configuration includes a LBT mode that does not require performing CCA before sending data, so that the CCA is not performed in a scenario where there is no need to perform the CCA when the interference is not serious, which effectively avoids interference and improves the transmission efficiency.

FIG. 4 is a flowchart illustrating a channel access method according to some embodiments. As illustrated in FIG. 4, the channel access method is performed by a network device and includes the following.

In step S 11, a LBT mode is configured.

In embodiments of the disclosure, the configured LBT mode includes not performing the CCA before sending data. It is understandable that in embodiments of the disclosure, the configured LBT mode may also include performing the CCA before sending data.

The configured LBT mode includes configuration information on whether the CCA is performed before sending data, and the configuration information may be configured based on actual communication conditions.

In an implementation, the network device can determine, based on a network deployment, an interference level caused by sending data by the terminal. For configuring the LBT mode, the network device can determine, based on the network deployment, the interference level caused by sending data by the terminal to configure the LBT mode. For example, for the network deployment in a large indoor factory, the spacing and configuration between network devices are preset, and the network device can determine the interference level caused by sending data by the terminal.

In response to determining based on the network deployment that the interference level caused by sending data by the terminal is less than the detection threshold, the LBT mode for the terminal is configured to include not performing the CCA before sending the data. In response to determining based on the network deployment that the interference level caused by sending data by the terminal is greater than or equal to the detection threshold, the LBT mode for the terminal is configured to include performing the CCA before sending the data.

In an example, for multiple terminals in a cell, the network device can be configured with different LBT modes. For example, the terminal in the center of a cell is far away from the network device and the terminals in other cells, and therefore in the high frequency scenario, the terminal in the center of the cell will not cause interference to other cells when sending data, and terminals in the same cell will cause no interference between the terminals in the cell through the scheduling by the network device. Therefore, in configuring the LBT mode for the terminal by the network device, the network device can configure "not performing LBT" in the uplink transmission of the terminal, that is, not performing the CCA before sending the data. For terminals at the edge of the cell, since they are relatively close to neighboring cells, the cells may cause the interference with neighboring cells. Therefore, in configuring the LBT mode by the network device, the network device configures, for the terminal at the edge of the cell, a LBT mode that performs the CCA before sending the data.

In another implementation, the network device configures the LBT mode for the terminal based on the recommended LBT mode reported by the terminal. The recommended LBT mode reported by the terminal may be determined based on an interference measurement result and/or an interference degree of historical data transmission. For example, the terminal can determine whether LBT is required or which LBT mode is required by measuring the interference around the terminal or according to the interference degree of the historical downlink reception, and send the recommended LBT mode to the network device through a high-layer signaling. In an example, the recommended LBT mode includes not performing the CCA before sending the data. In another example, the recommended LBT mode includes performing the CCA before sending the data and includes the specific LBT mode, such as Cat2 or Cat4.

In step S 12, configuration information of the LBT mode is sent.

In embodiments of the disclosure, the network device can send the configuration information of the LBT mode to the terminal by adopting different modes based on the type of scheduling data transmission (dynamically scheduled or semi-persistent configured).

In an implementation, for the semi-persistent configured data transmission, the configuration information of the LBT mode is sent based on a RRC signaling.

In an example, in an unlicensed frequency band system, for semi-persistent configured downlink transmission/uplink transmission, for example, the semi-persistent Physical Downlink Shared channel (SPS PDSCH) or configured grant Physical Uplink Shared channel (CG-PUSCH), the LBT mode can be directly configured through a RRC layer signaling. In addition to the LBT mode in the existing protocol, the configured LBT mode can also include "not performing LBT". "Not performing LBT" means that the transmitting end (e.g., the base station or the terminal) does not need to perform the CCA before sending the data.

In another implementation, for semi-persistent configured data transmission, one or more LBT modes are configured based on the RRC signaling, and one of the one or more LBT modes is activated through downlink control information (DCI). For example, the terminal can be configured, through the RRC layer signaling, with one or more LBT modes that the terminal may use. For example, the CCat2, Cat4, and the like can be configured with a performing LBT mode, a not-performing LBT mode or the like. The not-performing LBT mode can be indicated through the DCI, and then the LBT mode for the semi-persistent configured data indicated by the DCI is the not-performing LBT mode, that is, the CCA is not performed before the data is sent.

In yet another implementation, for dynamically scheduled data transmission, one or more LBT modes are configured based on the RRC signaling, and one of the one or more LBT modes is indicated through a dynamic scheduling instruction.

In an example, for PDSCH/PUSCH transmission that is dynamically scheduled or activated through downlink/uplink scheduling instructions, the network device configures the terminal with one or more LBT modes that the terminal may use through a RRC layer signaling. In addition to the LBT mode in the existing protocol, the configured one or more LBT modes can include "not performing LBT". Then, the network device indicates, through the downlink/uplink scheduling instructions, a specific LBT mode that is actually used when the terminal performs the downlink reception/uplink transmission in this scheduling, and the specific LBT mode may be "not performing LBT".

In embodiments of the disclosure, the network device is configured with an LBT mode that does not perform the CCA before sending data and sends the configuration information of the LBT mode to the terminal. The terminal receives the configuration information of the LBT mode, and determines based on the configuration information the LBT mode that does not perform the CCA. Therefore, LBT is not performed in the scenario where the interference is not serious, which effectively avoids interference and improves the transmission efficiency.

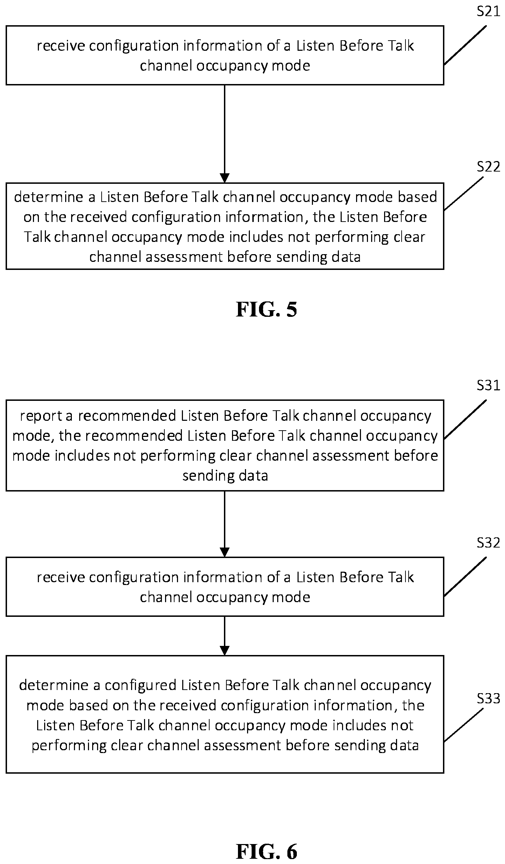

FIG. 5 is a flowchart illustrating a channel access method according to some embodiments. As illustrated in FIG. 5, the channel access method is performed by a terminal and includes the following.

In step S21, configuration information of a LBT mode is received.

The configuration information of the LBT mode received by the terminal may be configured and sent by the network device based on a network deployment or a recommended LBT mode reported by the terminal.

In step S22, based on the received configuration information, the configured LBT mode is determined, and the LBT mode includes not performing CCA before sending data.

In an implementation, the terminal may report the recommended LBT mode. FIG. 6 is a flowchart illustrating a channel access method according to some embodiments. As illustrated in FIG. 6, the channel access method is performed by a terminal and includes the following.

In step S31, a recommended LBT mode is reported. The recommended LBT mode includes not performing the CCA before sending data.

The recommended LBT mode is determined based on the interference measurement result and/or the interference degree of historical data transmission.

In step S32, configuration information of the LBT mode is received.

In step S33, the configured LBT mode is determined based on the received configuration information. The LBT mode includes not performing the CCA before sending data.

In embodiments of the disclosure, the terminal receives the configuration information of the LBT and determines the configured LBT mode based on the received configuration information. Different modes may be adopted according to the data transmission type (dynamically scheduled or semi-persistent configured) configured by the terminal.

In an implementation, for semi-persistent configured data transmission, the configured LBT mode is determined based on the RRC signaling.

In another implementation, for semi-persistent configured data transmission, one or more configured LBT modes are determined based on the RRC signaling, and one of the one or more configured LBT modes activated by the DCI is determined as the configured LBT mode.

In yet another implementation, for the dynamically scheduled data transmission, one or more configured LBT modes are determined based on the RRC signaling, and one of the one or more configured LBT modes indicated by the dynamic scheduling instruction is determined as the configured LBT mode.

The channel access method according to embodiments of the disclosure is also applicable to the process of interaction between the terminal and the network device. In an example, the terminal reports a recommended LBT mode including not performing the CCA before sending data. The network device configures the LBT mode based on the recommended LBT mode reported by the terminal. The configured LBT mode includes not performing the CCA before sending data. The network device sends the configuration information of the LBT mode to the terminal. The terminal receives the configuration information of the LBT mode sent by the network device, determines based on the configuration information the LBT mode that does not perform CCA before sending data, and directly accesses the channel without performing CCA before accessing the channel in the subsequent communication process. In another example, the network device configures the LBT mode based on network deployment, and the configured LBT mode includes not performing CCA before sending data. The network device sends the configuration information of the LBT mode to the terminal. The terminal receives the configuration information of the LBT mode sent by the network device, determines based on the configuration information the LBT mode including not performing the CCA before sending data, and directly accesses the channel without performing CCA before accessing the channel in the subsequent communication process.

In embodiments of the disclosure, for the process of the terminal and the network device interacting to implement the LBT configuration before the channel access process in the unlicensed frequency band, please refer to the related description of the foregoing embodiments, which will not be repeated here.

Based on the same concept, embodiments of the disclosure also provide a channel access apparatus.

It is understandable that, in order to implement the above-mentioned functions, the channel access apparatus according to embodiments of the disclosure includes hardware structures and/or software modules corresponding to the functions. In combination with the units and algorithm steps of the examples disclosed in embodiments of the disclosure, the embodiments of the disclosure can be implemented in the form of hardware or a combination of hardware and computer software. Whether a certain function is executed by hardware or computer software-driven hardware depends on the specific application and design constraint conditions of the technical solution. Those skilled in the art can use different methods for each specific application to implement the described functions, but such implementation should not be considered as going beyond the scope of the technical solutions of the embodiments of the disclosure.

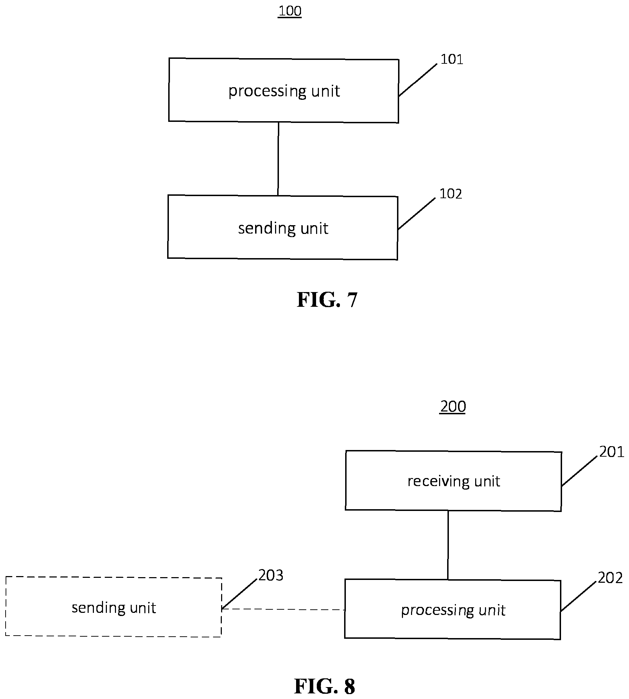

FIG. 7 is a block diagram illustrating a channel access apparatus according to some embodiments. As illustrated in FIG. 7, the channel access apparatus 100 includes a processing unit 101 and a sending unit 102.

The processing unit 101 is configured to configure a LBT mode. The LBT mode includes not performing the CCA before sending data. The sending unit 102 is configured to send configuration information of the LBT mode.

In an implementation, the processing unit 101 is configured to configure the LBT mode by: in response to determining, based on a network deployment, that an interference level caused by sending data by a terminal is less than a detection threshold, configuring that the LBT mode for the terminal includes not performing CCA before sending the data.

In another implementation, the processing unit 101 is configured to configure the LBT mode by: configuring a LBT mode for a terminal based on a recommended LBT mode reported by the terminal. The recommended LBT mode includes not performing CCA before sending data.

In another implementation, the sending unit 102 is configured to send configuration information of the LBT mode by: for semi-persistent configured data transmission, sending the configuration information of the LBT mode based on a RRC signaling.

In another implementation, the sending unit 102 is configured to send the configuration information of the LBT mode by: for semi-persistent configured data transmission, configuring one or more LBT modes based on a RRC signaling, and activating one of the one or more LBT modes through DCI.

In another implementation, the sending unit 102 is configured to send the configuration information of the LBT mode by: for dynamically scheduled data transmission, configuring one or more LBT modes based on a RRC signaling, and indicating one of the one or more LBT modes through a dynamic scheduling instruction.

FIG. 8 is a block diagram illustrating a channel access apparatus according to some embodiments. As illustrated in FIG. 8, the channel access apparatus 200 includes a receiving unit 201 and a processing unit 202.

The receiving unit 201 is configured to receive configuration information of a LBT mode. The processing unit 202 is configured to determine a configured LBT mode based on the configuration information. The LBT mode includes not performing CCA before sending data.

In an implementation, the channel access apparatus 200 further includes a sending unit 203. The sending unit 203 is further configured to report a recommended LBT mode. The recommended LBT mode includes not performing CCA before sending data.

In another implementation, the recommended LBT mode is determined based on an interference measurement result and/or an interference degree of historical data transmission.

In another implementation, the processing unit 202 is configured to determine the configured LBT mode by: for semi-persistent configured data transmission, determining the configured LBT mode based on a RRC signaling.

In another implementation, the processing unit 202 is configured to determine the configured LBT mode by: for semi-persistent configured data transmission, determining one or more configured LBT modes based on a RRC signaling, and determining one of the configured one or more LBT modes activated by DCI as the configured LBT mode.

In another implementation, the processing unit 202 is configured to determine the configured LBT mode by: for dynamically scheduled data transmission, determining one or more configured LBT modes based on a RRC signaling, and indicating one of the one or more configured LBT modes indicated by a dynamic scheduling instruction as the configured LBT mode.

Regarding the apparatus in the foregoing embodiments, the specific manner in which each module performs the operation has been described in detail in embodiments of the method, and detailed descriptions will not be given here.

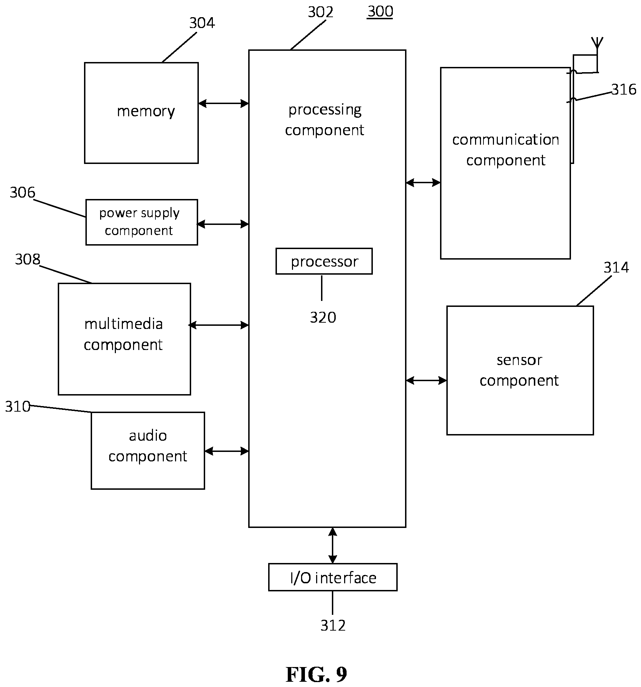

FIG. 9 is a block diagram illustrating a channel access device 300 according to some embodiments. For example, the device 300 may be a mobile phone, a computer, a digital broadcasting terminal, a messaging device, a game console, a tablet device, a medical device, a fitness device, a personal digital assistant, etc.

As illustrated in FIG.9, the device 300 may include one or more of the following components: a processing component 302, a memory 304, a power supply component 306, a multimedia component 308, an audio component 310, an input/output (I/O) interface 312, a sensor component 314, and a communication component 316.

The processing component 302 generally controls the overall operations of the device 300, such as operations associated with display, telephone calls, data communications, camera operations, and recording operations. The processing component 302 may include one or more processors 320 to execute instructions to complete all or part of the steps of the foregoing method. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support the operation of the device 300. Examples of such data include instructions for any application or method operating on the device 300, contact data, phone book data, messages, pictures, videos, etc. The memory 304 can be implemented by any type of volatile or non-volatile storage devices or their combination, such as static random access memory (SRAM), electrically erasable programmable read-only memory (EEPROM), Erasable Programmable Read Only Memory (EPROM), Programmable Read Only Memory (PROM), Read Only Memory (ROM), Magnetic Memory, Flash Memory, Magnetic Disk or Optical Disk.

The power supply component 306 provides power to various components of the device 300. The power supply component 306 may include a power management system, one or more power supplies, and other components associated with generating, managing, and distributing power for the device 300.

The multimedia component 308 includes a screen that provides an output interface between the device 300 and users. In some embodiments, the screen may include a liquid crystal display (LCD) and a touch panel (TP). If the screen includes a touch panel, the screen may be implemented as a touch screen to receive input signals from the users. The touch panel includes one or more touch sensors to sense touch, sliding, and gestures on the touch panel. The touch sensor may not only sense the boundary of a touch or slide action, but also detect the duration and pressure related to the touch or slide operation. In some embodiments, the multimedia component 308 includes a front-facing camera and/or a rear-facing camera. When the device 300 is in an operation mode, such as a shooting mode or a video mode, the front-facing camera and/or the rear-facing camera can receive external multimedia data. Each of the front-facing camera and the rear-facing camera can be a fixed optical lens system or have focal length and optical zoom capabilities.

The audio component 310 is configured to output and/or input audio signals. For example, the audio component 310 includes a microphone (MIC). When the device 300 is in an operation mode, such as a call mode, a recording mode, and a voice recognition mode, the microphone is configured to receive an external audio signal. The received audio signal can be further stored in the memory 304 or sent via the communication component 316. In some embodiments, the audio component 310 further includes a speaker for outputting audio signals.

The I/O interface 312 provides an interface between the processing component 302 and a peripheral interface module. The above-mentioned peripheral interface module may be a keyboard, a click wheel, a button, and the like. These buttons may include but are not limited to: home button, volume button, start button, and lock button.

The sensor component 314 includes one or more sensors for providing the device 300 with various aspects of state evaluation. For example, the sensor component 314 can detect the open/close state of the device 300 and the relative positioning of the components. For example, the components are the display and the keypad of the device 300. The sensor component 314 can also detect the position change of the device 300 or a component of the device 300, the presence or absence of contact between the user and the device 300, the orientation or acceleration/deceleration of the device 300, and the temperature change of the device 300. The sensor component 314 may include a proximity sensor configured to detect the presence of nearby objects when there is no physical contact. The sensor component 314 may also include a light sensor, such as a CMOS or CCD image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 can access a wireless network according to a communication standard, such as WIFI, 2G, or 3G, or a combination thereof. In some embodiments, the communication component 316 receives a broadcast signal or broadcast related information from an external broadcast management system via a broadcast channel. In some embodiments, the communication component 316 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In some embodiments, the device 300 may be implemented by one or more application specific integrated circuits (ASIC), digital signal processors (DSP), digital signal processing equipment (DSPD), programmable logic devices (PLD), field programmable gate array (FPGA), controller, microcontroller, microprocessor, or other electronic component to implement the above method.

In some embodiments, there is also provided a non-transitory computer-readable storage medium including instructions, such as the memory 304 including instructions, which may be executed by the processor 320 of the device 300 to perform the foregoing method. For example, the non-transitory computer-readable storage medium may be ROM, random access memory (RAM), CD-ROM, magnetic tape, floppy disk, optical data storage device, etc.

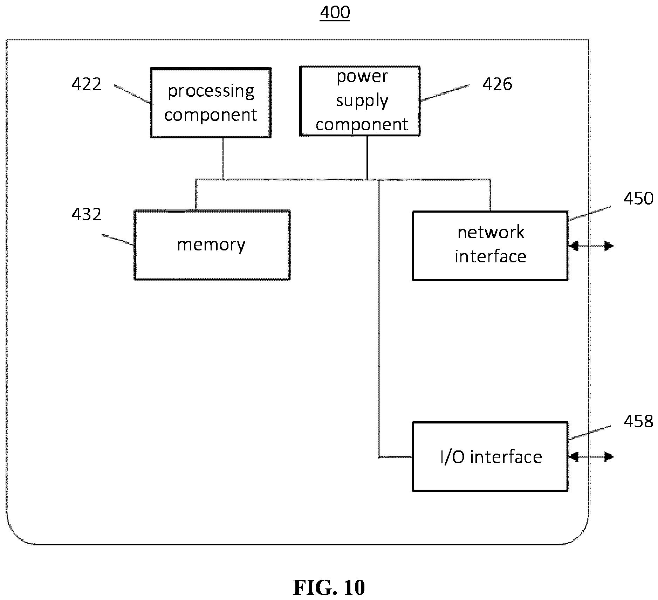

FIG. 10 is a block diagram illustrating a channel access device 400 according to some embodiments. For example, the device 400 may be provided as a network device, such as a base station or the like. As illustrated in FIG. 9, the device 400 includes a processing component 422, which further includes one or more processors, and memory resources represented by the memory 432, for storing instructions that can be executed by the processing component 422, such as application programs. The application programs stored in the memory 432 may include one or more modules each corresponding to a set of instructions. In addition, the processing component 422 is configured to execute instructions to perform the above-mentioned method.

The device 400 may also include a power supply component 426 configured to perform power management of the device 400, a wired or wireless network interface 450 configured to connect the device 400 to a network, and an input output (I/O) interface 458. The device 400 can operate according to an operating system stored in the memory 432, such as Windows ServerTM, Mac OS XTM, UnixTM, LinuxTM, FreeBSDTM or the like.

In some embodiments, there is also provided a non-transitory computer-readable storage medium including instructions, such as the memory 432 including instructions, which may be executed by the processing component 422 of the device 400 to perform the foregoing method. For example, the non-transitory computer-readable storage medium may be ROM, random access memory (RAM), CD-ROM, magnetic tape, floppy disk, optical data storage device, etc.

It is further understandable that in the disclosure, "a plurality of refers to two or more than two, and other quantifiers are similar. The term "and/or" describes the association relationship of the associated objects, indicating that there can be three types of relationships. For example, A or B means: A, or B, or both A and B. The character "/" generally indicates that the associated objects before and after are in an "or" relationship. The singular forms "a", "said" and "the" are also intended to include plural forms, unless the context clearly indicates other meanings.

It is further understandable that the terms "first", "second", etc. are used to describe various information, but the information should not be limited to these terms. These terms are only used to distinguish the same type of information from each other, and do not indicate a specific order or degree of importance. In fact, expressions such as "first" and "second" can be used interchangeably. For example, without departing from the scope of the disclosure, the first information may also be referred to as second information, and similarly, the second information may also be referred to as first information.

It is further understandable that although the operations in the embodiments of the disclosure are described in a specific order in the drawings, they should not be understood as requiring these operations to be performed in the specific order shown or in a serial order, or requiring performing all the operations shown to get the desired result. In certain circumstances, multitasking and parallel processing may be advantageous.

Those skilled in the art will easily think of other embodiments of the disclosure after considering the specification and practicing the disclosure herein. This disclosure is intended to cover any variations, uses, or adaptive changes of the disclosure. These variations, uses, or adaptive changes follow the general principles of the disclosure. In addition, this disclosure includes common knowledge or conventional technical means in the technical field that are not disclosed in the disclosure. The description and embodiments are to be regarded as examples only, and the true scope and spirit of the disclosure are pointed out by the following claims.

It is understandable that the disclosure is not limited to the precise structure that has been described above and shown in the drawings, and various modifications and changes can be made without departing from its scope. The scope of the disclosure is only limited by the appended claims.

## Claims

1. A channel access method, comprising:
configuring a Listen Before Talk channel occupancy mode, wherein the Listen Before Talk channel occupancy mode comprises not performing clear channel assessment before sending data; and
sending configuration information of the Listen Before Talk channel occupancy mode.

2. The method of claim 1, wherein configuring the Listen Before Talk channel occupancy mode comprises:
in response to determining, based on a network deployment, that an interference level caused by sending data by a terminal is less than a detection threshold, configuring that the Listen Before Talk channel occupancy mode for the terminal comprises not performing clear channel assessment before sending data.

3. The method of claim 1, wherein configuring the Listen Before Talk channel occupancy mode comprises:
configuring the Listen Before Talk channel occupancy mode for a terminal based on a recommended Listen Before Talk channel occupancy mode reported by the terminal;
wherein the recommended Listen Before Talk channel occupancy mode comprises not performing clear channel assessment before sending data.

4. The method of any one of claims 1 to 3, wherein sending the configuration information of the Listen Before Talk channel occupancy mode comprises:
for semi-persistent configured data transmission, sending the configuration information of the Listen Before Talk channel occupancy mode based on a radio resource control signaling.

5. The method of any one of claims 1 to 3, wherein sending the configuration information of the Listen Before Talk channel occupancy mode comprises:
for semi-persistent configured data transmission, configuring one or more Listen Before Talk channel occupancy modes based on a radio resource control signaling, and activating one of the one or more Listen Before Talk channel occupancy modes through a downlink control information signaling.

6. The method of any one of claims 1 to 3, wherein sending the configuration information of the Listen Before Talk channel occupancy mode comprises:
for dynamically scheduled data transmission, configuring one or more Listen Before Talk channel occupancy modes based on a radio resource control signaling, and indicating one of the one or more Listen Before Talk channel occupancy modes through a dynamic scheduling instruction.

7. The method of claim 1, wherein the Listen Before Talk channel occupancy mode comprises performing clear channel assessment before sending data.

8. A channel access method, comprising:
receiving configuration information of a Listen Before Talk channel occupancy mode; and
determining a configured Listen Before Talk channel occupancy mode based on the configuration information, wherein the Listen Before Talk channel occupancy mode comprises not performing clear channel assessment before sending data.

9. The method of claim 8, further comprising:
reporting a recommended Listen Before Talk channel occupancy mode, wherein the recommended Listen Before Talk channel occupancy mode comprises not performing clear channel assessment before sending data.

10. The method of claim 9, wherein the recommended Listen Before Talk channel occupancy mode is determined based on an interference measurement result and/or an interference degree of historical data transmission.

11. The method of claim 8, wherein determining the configured Listen Before Talk channel occupancy mode comprises:
for semi-persistent configured data transmission, determining the configured Listen Before Talk channel occupancy mode based on a radio resource control signaling.

12. The method of claim 8, wherein determining the configured Listen Before Talk channel occupancy mode comprises:
for semi-persistent configured data transmission, determining one or more configured Listen Before Talk channel occupancy modes based on a radio resource control signaling, and determining one of the one or more Listen Before Talk channel occupancy modes activated by a downlink control information signaling as the configured Listen Before Talk channel occupancy mode.

13. The method of claim 8, wherein determining the configured Listen Before Talk channel occupancy mode comprises:
for dynamically scheduled data transmission, determining one or more configured Listen Before Talk channel occupancy modes based on a radio resource control signaling, and determining one of the one or more Listen Before Talk channel occupancy modes indicated by a dynamic scheduling instruction as the configured Listen Before Talk channel occupancy mode.

14. A channel access apparatus, comprising:
a processing unit, configured to configure a Listen Before Talk channel occupancy mode, wherein the Listen Before Talk channel occupancy mode comprises not performing clear channel assessment before sending data; and
a sending unit, configured to send configuration information of the Listen Before Talk channel occupancy mode.

15. The apparatus of claim 14, wherein the processing unit is configured to configure the Listen Before Talk channel occupancy mode by:
in response to determining, based on a network deployment, that an interference level caused by terminal sending data by a terminal is less than a detection threshold, configure that the Listen Before Talk channel occupancy mode for the terminal comprises not performing clear channel assessment before sending data.

16. The apparatus of claim 14, wherein the processing unit is configured to configure the Listen Before Talk channel occupancy mode by:
configuring the Listen Before Talk channel occupancy mode for a terminal based on a recommended Listen Before Talk channel occupancy mode reported by the terminal;
wherein the recommended Listen Before Talk channel occupancy mode comprises not performing clear channel assessment before sending data.

17. A channel access apparatus, comprising:
a receiving unit, configured to receive configuration information of a Listen Before Talk channel occupancy mode; and
a processing unit, configured to determine a configured Listen Before Talk channel occupancy mode based on the configuration information, wherein the Listen Before Talk channel occupancy mode comprises not performing clear channel assessment before sending data.

18. The apparatus of claim 17, further comprising a sending unit,
wherein the sending unit is configured to report a recommended Listen Before Talk channel occupancy mode, wherein the recommended Listen Before Talk channel occupancy mode comprises not performing clear channel assessment before sending data.

19. A channel access device, comprising:
a processor; and
a memory, configured to store instructions executable by the processor;
wherein the processor is configured to perform a channel access method of any one of claims 1 to 7.

20. A channel access device, comprising:
a processor; and
a memory configured to store instruction executable by the processor;
wherein the processor is configured to perform a channel access method of any one of claims 8 to 13.

21. A non-transitory computer-readable storage medium, wherein when instructions in the storage medium are executed by a processor of a network device, the network device is caused to perform a channel access method of any one of claims 1 to 7.

22. A non-transitory computer-readable storage medium, wherein when the instructions in the storage medium are executed by a processor of a mobile terminal, the mobile terminal is caused to perform a channel access method according to any one of claims 8 to 13.
